# EUROPÄISCHE PATENTANMELDUNG

(11) **EP 0 617 500 A1**
(43) Veröffentlichungstag der Anmeldung: **28.09.1994**
(21) Anmeldenummer: 94101338.5
(22) Anmeldetag: 29.01.1994
(51) Int. Cl.: H02J 7/34, G08B 25/10

(54) **Vorrichtung zur drahtlosen Datenübermittlung**

(30) Priorität: 20.03.1993 DE 4309006
(71) Anmelder: Stewing Nachrichtentechnik GmbH & Co. KG Berlin, D-13599 Berlin (DE)
(72) Erfinder: Berger, Dieter, 12159 Berlin (DE); Meyer-Quade, Joachim, 14197 Berlin (DE); Ostermann, Bernd, 12207 Berlin (DE)
(74) Vertreter: Honke, Manfred, Dr.-Ing.

(57) **Zusammenfassung**

Es handelt sich um eine Vorrichtung zur drahtlosen Datenübermittlung mittels Schallwellen, Lichtwellen oder dergleichen Kugelwellen, mit zumindest einem Sender und einem auf den Sender abgestimmten Empfänger. Die Energieversorgung des Senders erfolgt mittels einer Solarzelle. Außerdem ist ein Energiespeicher und ein Mikroprozessor zur Funktionssteuerung vorgesehen. Der Sender selbst weist ein Infrarot-Sendeelement oder Ultraschall-Sendeelement oder eine Sendeantenne und einen Glasbruchmelder auf, so daß sich die Vorrichtung bevorzugt als Einbruchsicherung einsetzen läßt.

## Beschreibung

Die Erfindung betrifft eine Vorrichtung zur drahtlosen Datenübermittlung mittels Schallwellen, Lichtwellen oder dergleichen Kugelwellen, mit zumindest einem Sender und einem auf den Sender abgestimmten Empfänger.

Eine derartige Vorrichtung zur drahtlosen Datenübermittlung ist aus der Literaturstelle "Das entfesselte Terminal", Funkschau 25/1990, Seiten 62 bis 66, bekannt. Dabei handelt es sich um das mobile Datenfunksystem "Modacom" der TELEKOM, welches insbesondere zur Datenübertragung zwischen einem sogenannten Hostrechner und einem mobilen oder portablen Datenterminal geeignet ist. Eine vom Stromnetz unabhängige Energieversorgung ist nicht vorgesehen.

Weiter kennt man eine Einbruchsicherung, die auf einer Unterbrechung der Ausbreitung von elektromagnetischen Wellen oder einer Veränderung der empfangenen Intensitäten oder Phasenbeziehungen innerhalb zu schützender Flächen beruht. Bei der jeweils zu schützenden Fläche kann es sich um ein Verbundsystem aus Glas handeln. Der von einer Lichtquelle eingeblendete Lichtstrahl gelangt nach mehreren Reflexionen auf einen Empfänger. Wenn das vom Empfänger registrierte Signal nicht mit einer vorgegebenen Modulation übereinstimmt oder wenn die von der Lichtquelle ausgestrahlte Gesamtintensität mit der empfangenen Intensität nicht vergleichbar ist, kommt es zu einer Alarmauslösung (vgl. DE-OS 23 53 702).

Außerdem kennt man eine Sicherungsanlage für lichtdurchlässige Medien mit Mikrorechnerauswertung, bei der frequenzmodulierte elektromagnetische Wellen im Infrarotbereich das Medium durchqueren. Jegliche Änderung der Strahlungsintensität wird nach einer frequenzselektiven Verstärkung und einer Analog/Digital-Wandlung durch den Mikrorechner ausgewertet. Eine solche Sicherungsanlage kann als Einbruchsicherung, Prozeßüberwachung, Meßeinrichtung oder dergleichen eingesetzt werden (vgl. DD-PS 207 275).

Der Erfindung liegt die Aufgabe zugrunde, eine Vorrichtung zur drahtlosen Datenübermittlung der eingangs beschriebenen Ausführungsform zu schaffen, die sich durch eine vom Stromnetz unabhängige und darüber hinaus regenerative Energieversorgung bei extrem kompakter und unschwer montierbarer Bauweise auszeichnet und insbesondere eine Auswertung und Vorverarbeitung von durch einen gegebenenfalls angeschlossenen Sensor gelieferten Sensordaten ermöglicht.

Diese Aufgabe löst die Erfindung bei einer gattungsgemäßen Vorrichtung dadurch, daß die Energieversorgung des Senders mittels einer oder mehreren Solarzellen erfolgt, wobei zwischen der Solarzelle und dem Sender ein Energiespeicher angeordnet ist, und daß zwischen dem Energiespeicher und dem Sender ein Mikroprozessor (Mikrocontroller) zur Funktionssteuerung zwischengeschaltet und der Sender außerdem unmittelbar an den Energiespeicher angeschlossen ist. - Durch diese erfindungsgemäßen Maßnahmen wird zunächst einmal eine regenerative Energieversorgung auf Basis von Raum- oder Tageslicht erreicht. Unter Berücksichtigung der Tatsache, daß die verwendete primäre Energiequelle - die Solarzelle bzw. -zellen - direkt von Lichtbestrahlung abhängig ist, sorgt der Energiespeicher zur Überbrückung von bestrahlungsarmen oder -freien Dunkelzeiten. Mit Hilfe des Mikroprozessors (Mikrocontrollers) werden sämtliche Funktionen des Sendebetriebes, der Überwachung der Sensorik und der Kontrolle der Energieversorgung wahrgenommen. Dabei ist zunächst einmal überraschend, daß zwischen dem Energiespeicher und dem Sender ein Mikroprozessor zur Funktionssteuerung überhaupt zwischengeschaltet werden kann. Denn normalerweise versucht man bei einer mobilen Anordnung, welche nur durch Solarstrom mit Energie versorgt wird, auf alle unnötigen Verbraucher - also auch auf einen Mikroprozessor - zu verzichten. Die Erfindung hat jedoch erkannt, daß die mit einem Mikroprozessor erreichten Vorteile - insbesondere wenn dieser in CMOS-Technik gefertigt ist - die Nachteile des zusätzlichen Energieverbrauches bei weitem übertreffen. Denn nun ist es möglich, die Kontrolle der Energieversorgung so vorzusehen, daß die erfindungsgemäße Vorrichtung zur drahtlosen Datenübermittlung mit Strom aus Solarzelle(n) und/oder Akku versorgt wird. Außerdem erlaubt der zwischen dem Energiespeicher und dem Sender zwischengeschaltete Mikroprozessor bzw. Mikrocontroller einen an die erfindungsgemäße Vorrichtung eventuell angeschlossenen Sensor zu überwachen und beispielsweise bei Überschreiten eines bestimmten Schwellwertes am Sensor die Sensordaten auszuwerten und vorzuverarbeiten. Eine solche Auswertung und Vorverarbeitung kann im einfachsten Fall darin bestehen, beispielsweise den zeitlichen Anstieg eines Sensorsignals durch Differenzieren nach der Zeit zu ermitteln und hieraus Rückschlüsse zu ziehen.

Damit ist insgesamt auch die Einhaltung eines komplexen Übertragungsprotokolls und die "intelligente" Auswertung und Vorverarbeitung der Sensordaten möglich. Darüber hinaus kann der Sender erst nach Auswertung und Vorverarbeitung der Sensordaten möglicherweise aktiviert werden, trägt also nur in diesem Fall zu einem nennenswerten Stromverbrauch bei. Dies alles gelingt erfindungsgemäß bei einer extrem kompakten und unschwer montierbaren Bauweise.

Weitere erfindungswesentliche Merkmale sind im folgenden aufgeführt. So ist bevorzugt vorgesehen, daß der Energiespeicher als Kondensator oder Akkumulator ausgebildet ist. Wird die Lebensdauer der erfindungsgemäßen Vorrichtung gegenüber der erreichbaren Überbrückungszeit von Dunkelphasen in den Vordergrund gestellt, bietet sich die Verwendung eines Kondensators bzw. Kondensatorsystems als Energiespeicher an. Dabei wird durch die Solarzelle bzw. -zellen ein Kondensator extremer Kapazität aufgeladen und die Ladung dann durch eine geeignete Zwischenstufe an eine Überwachungsschaltung zur Stromversorgung wieder abgegeben werden. Der Vorteil bei dieser Ausführungsform liegt in einem völlig wartungsfreien, langlebigen Aufbau. Wird dagegen die erreichbare Überbrückungszeit vorrangig beurteilt und eine Einschränkung der Lebensdauer in Kauf genommen, kann ein Akkumulator als Energiespeicher eingesetzt werden. In diesem Fall wird der Akkumulator aufgeladen und die Stromversorgung für den Betrieb der erfindungsgemäßen Vorrichtung durch Entladung gewährleistet. Der Sender weist im Rahmen der Erfindung eine möglichst geringe Stromaufnahme auf und kann mit einem Infrarot-Sendeelement, einem Ultraschall-Sendeelement und/oder einer Sendeantenne ausgerüstet sein. Dadurch ist der Sender in der Lage, die Daten durch das Ausstrahlen von Schallwellen, Lichtwellen oder dergleichen Kugelwellen zu übertragen. Bei der Übertragung durch elektromagnetische Wellen sind die bestehenden Vorschriften Rahmenbedingungen und wirken direkt durch - den erlaubten Frequenzbereich auf die kontruktive Gestaltung der erfindungsgemäßen Vorrichtung (z. B. Größe der Sendeantenne) ein. Zur Übertragung der Daten ist eine geeignete Codierung und ein entsprechendes Protokoll zu verwenden. Für den Empfänger stehen sämtliche Möglichkeiten der Realisierung hinsichtlich bekannter Technik, Stromversorgung und Funktion offen.

Nach einer weiteren erfindungsgemäßen Auführungsform läßt sich die Vorrichtung als gleichsam drahtlose Einbruchsicherung einsetzen. Für einen solchen Fall empfiehlt die Erfindung, daß der Sender, z. B. auf seiner Rückseite, einen Glasbruchmelder und zumindest eine Solarzelle aufweist. Außerdem ist der Sender mit einem Kontaktwächter, z. B. Reedkontakt, und einem Magneten zur Betätigung des Reedkontaktes ausgerüstet oder steht über ein Kabel mit einem solchen Kontaktwächter bzw. Reedkontakt in Verbindung. Dieser Kontaktwächter übermittelt als Fensterwächter oder Türwächter einen oder mehrere der möglichen Zustände wie "geöffnet/geschlossen/entriegelt/verriegelt". Der Glasbruchmelder meldet Glasbruch. - Eine mögliche Ausführungsform kann aus einem Hauptgehäuse mit den Abmessungen einer Streichholzschachtel oder kleiner und dem Kontaktwächter bestehen. Im Hauptgehäuse sind der Glasbruchmelder und zumindest eine Solarzelle derart an der Rückseite montiert, daß das Hauptgehäuse einfach auf eine Fensterscheibe aufgeklebt werden kann. Der Kontaktwächter ist in der Ausführungsform eines berührungslos arbeitenden Reedkontaktes über ein Kabel angeschlossen. Der zur Betätigung des Reedkontaktes erforderliche Magnet - hier Dauermagnet - ist in einem zum Kontaktwächter korrespondierenden Gehäuse untergebracht. - Im Falle der Lichtübertragung weist die Vorderseite des Hauptgehäuses eine Sendelichtquelle, z. B. eine Leuchtdiode, sowie eine Kontrollanzeige auf. Bei Realisierung der Ultraschall-Version ist das Hauptgehäuse auf seiner Vorderseite mit dem Ultraschall-Sendeelement ausgerüstet. Bei der Funkversion könnte die Sendeantenne in dem Kabel zwischen Hauptgehäuse und Kontaktwächter bzw. Kontaktgehäuse untergebracht werden.

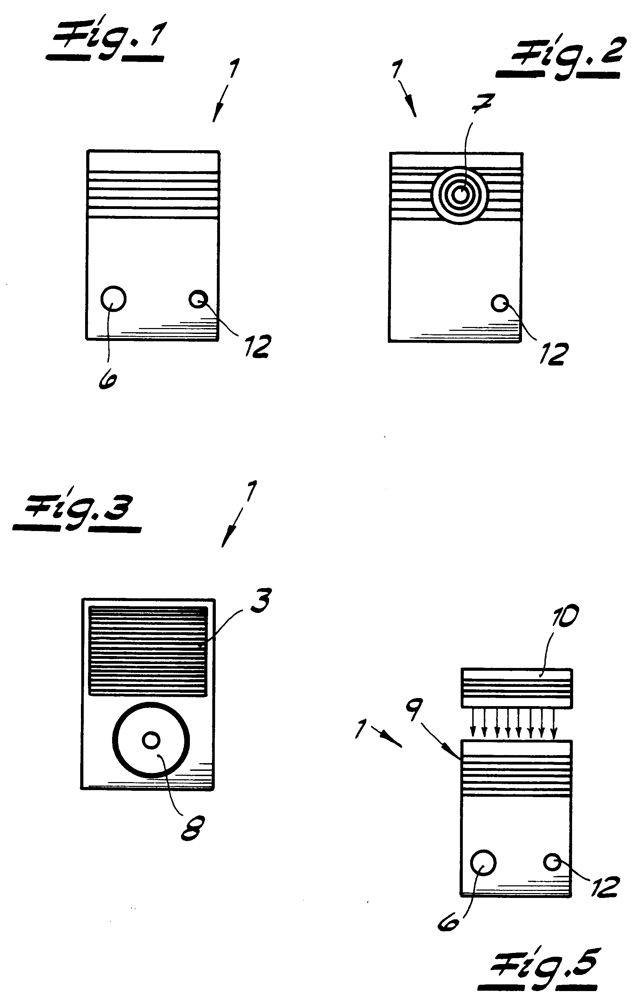

Im folgenden wird die Erfindung anhand einer lediglich ein Ausführungsbeispiel darstellenden Zeichnung näher erläutert; es zeigen
- **Fig. 1**: einen Sender für eine erfindungsgemäße Vorrichtung in Frontansicht mit einem Infrarot-Sendeelement,
- **Fig. 2**: den Gegenstand nach Fig. 1 mit einem Ultraschall-Sendeelement,
- **Fig. 3**: eine Ansicht auf die Rückseite des Gegenstandes der Fig. 1 mit einer Solarzelle und einem Glasbruchmelder,

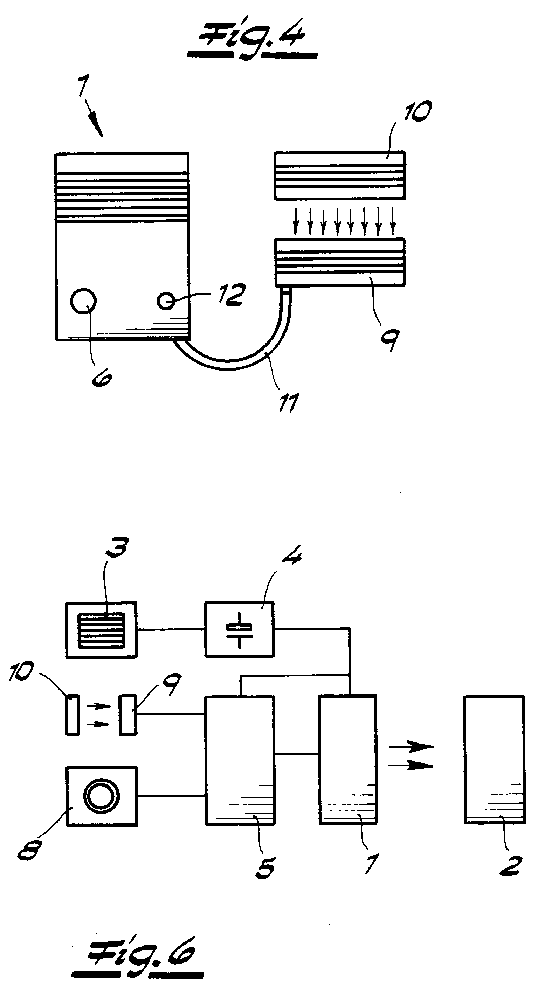

- **Fig. 4**: einen Sender für den Gegenstand nach Fig. 1 in Frontansicht und einen über ein Kabel angeschlossenen Kontaktwächter,
- **Fig. 5**: einen Sender für den Gegenstand nach Fig. 1 mit einem integrierten Kontaktwächter und
- **Fig. 6**: ein Blockdiagramm mit den wesentlichen Komponenten einer erfindungsgemäßen Vorrichtung.

In den Figuren ist eine Vorrichtung zur drahtlosen Datenübermittlung mittels Schallwellen, Lichtwellen oder dergleichen Kugelwellen dargestellt, die zumindest einen Sender 1 und einen auf den Sender 1 abgestimmten Empfänger 2 aufweist. Die Energieversorgung des Senders 1 erfolgt mittels einer oder mehrerer Solarzellen 3. Zwischen der Solarzelle 3 und dem Sender 1 ist ein Energiespeicher 4 angeordnet. Der Energiespeicher 4 kann als Kondensator oder Akkumulator ausgebildet sein. Zwischen dem Energiespeicher 4 und dem Sender 1 ist ein Mikroprozessor bzw. Mikrocontroller 5 zur Funktionssteuerung zwischengeschaltet. Der Sender 1 ist außerdem unmittelbar an den Energiespeicher 4 angeschlossen. Der Sender 1 kann ein Infrarot-Sendeelement 6 oder ein Ultraschall-Sendeelement 7 und/oder eine Sendeantenne aufweisen. Nach dem Ausführungsbeispiel ist der Sender 1 auf seiner Rückseite mit einem Glasbruchmelder 8 ausgerüstet. Auch die Solarzelle 3 befindet sich auf der Rückseite. Außerdem weist der Sender 1 einen Kontaktwächter, z. B. Reedkontakt 9 und einen Magneten 10 zur Betätigung des Reedkontaktes 9 auf. Dieser Kontaktwächter 9 kann über ein Kabel 11 mit dem Sender 1 in Verbindung stehen oder in den Sender 1 integriert sein. Das Kabel 11 kann die Sendeantenne aufnehmen. Außerdem besitzt der Sender 1 eine Kontrollanzeige 12.

Der Sender 1 mit Solarzelle(n) 3, Energiespeicher 4, Mikroprozessor 5, Glasbruchmelder 8 und Reedkontakt 9 weist das Format einer Streichholzschachtel oder sogar geringere Abmessungen auf.

Bei dem Ausführungsbeispiel nach Fig. 6 wird die im einfallenden Licht enthaltene Energie über eine Solarzelle 3 gewandelt und in dem zwischengeschalteten Energiespeicher 4 gesammelt. Aus diesem Energiespeicher 4 wird die Stromversorgung der zentralen Steuerung, dem Mikrocontroller 5 und dem Sender 1 betrieben. Die durch die Sensorik - Glasbruchmelder 8 und Reedkontakt(e) 9 - ermittelten Daten werden durch den Mikrocontroller 5 vorverarbeitet und durch den Sender 1 mittels Schall-, Licht- oder dergleichen Kugelwellen bezüglich ihrer Ausbreitung übertragen.

Bei der erfindungsgemäßen Vorrichtung handelt es sich bevorzugt um einen Melder, der in einem Alarmsystem eingesetzt werden kann. Dieser Melder kann an Zugängen montiert werden und überwacht durch je nach Anwendungsfall enthaltene Sensoren die Öffnung einer Tür oder eines Fensters (z. B. durch Reedkontakt), das Zerbrechen einer Scheibe (z. B durch Piezoglasbruchdetektor) oder das Bewegen einer Person durch einen Raumbereich (z. B. durch passive IR-Sensorik). Sensor- und Gerätestatus werden drahtlos zu dem Empfänger zwar übermittelt, die Stromversorgung erfolgt durch eine Kombination aus Solarzelle 3 und Energiespeicher 4. - Darüber hinaus sind auch andere Anwendungsfälle wie beispielsweise im Bereich des Brandschutzes denkbar. Stets ist in diesen Fällen die erfindungsgemäße Vorrichtung als Melder Bestandteil einer Sicherungs- und Meldeanlage.

## Patentansprüche

1. Vorrichtung zur drahtlosen Datenübermittlung mit zumindest einem Sender (1) und einem auf den Sender (1) abgestimmten Empfänger (2), **dadurch gekennzeichnet,** daß die Energieversorgung des Senders (1) mittels einer oder mehrere Solarzellen (3) erfolgt, wobei zwischen der Solarzelle (3) und dem Sender (1) ein Energiespeicher (4) angeordnet ist, und daß zwischen dem Energiespeicher (4) und dem Sender (1) ein Mikroprozessor (Mikrocontroller) (5) zur Funktionssteuerung zwischengeschaltet und der Sender (1) außerdem unmittelbar an den Energiespeicher (4) angeschlossen ist.

2. Vorrichtung nach Anspruch 1, dadurch gekennzeichnet, daß der Energiespeicher (4) als Kondensator oder Akkumulator ausgebildet ist.

3. Vorrichtung nach Anspruch 1 oder 2, dadurch gekennzeichnet, daß der Sender (1) ein Infrarot-Sendeelement (6) aufweist.

4. Vorrichtung nach einem der Ansprüche 1 bis 3, dadurch gekennzeichnet, daß der Sender (1) ein Ultraschall-Sendeelement (7) aufweist.

5. Vorrichtung nach einem der Ansprüche 1 bis 4, dadurch gekennzeichnet, daß der Sender (1), z. B. auf seiner Rückseite, einen Glasbruchmelder (8) aufweist.

6. Vorrichtung nach einem der Ansprüche 1 bis 5, dadurch gekennzeichnet, daß sich die Solarzelle(n) (3) auf der Rückseite des Senders (1) befindet.

7. Vorrichtung nach einem der Ansprüche 1, 2, 5 oder 6, dadurch gekennzeichnet, daß der Sender (1) eine Sendeantenne aufweist.

8. Vorrichtung nach einem der Ansprüche 1 bis 7, dadurch gekennzeichnet, daß der Sender (1) einen Kontaktwächter (9), z. B. Reedkontakt und einen Magneten (10) zur Betätigung des Reedkontaktes aufweist.

9. Vorrichtung nach einem der Ansprüche 1 bis 7, dadurch gekennzeichnet, daß der Sender (1) über ein Kabel (11) mit einem Kontaktwächter, z. B. Reedkontakt (9) in Verbindung steht.

10. Vorrichtung nach einem der Ansprüche 1 bis 9, dadurch gekennzeichnet, daß das Kabel (11) die Sendeantenne aufnimmt.

11. Vorrichtung nach einem der Ansprüche 1 bis 10, dadurch gekennzeichnet, daß der Sender (1) eine Kontrollanzeige (12) aufweist.

12. Vorrichtung nach einem der Ansprüche 1 bis 11, dadurch gekennzeichnet, daß der Sender (1) mit Solarzelle(n) (3), Energiespeicher (14), Mikroprozessor (5), Glasbruchmelder (8) und Kontaktwächter (9) Streichholzschachtelformat oder kleinere Abmessungen aufweist.
